# EUROPEAN PATENT SPECIFICATION

(11) **EP 4 336 359 B1**
(45) Date of publication and mention of the grant of the patent: **28.10.2026**
(21) Application number: 22836848.6
(22) Date of filing: 04.07.2022
(51) Int. Cl.: G06F 9/48, G06F 9/54, G06F 9/46, G06F 11/07

(54) **METHOD FOR PROCESSING PAGE FAULTS AND CORRESPONDING APPARATUS**
VERFAHREN ZUR VERARBEITUNG VON SEITENFEHLERN UND ENTSPRECHENDE VORRICHTUNG
PROCÉDÉ DE TRAITEMENT DE DÉFAUTS DE PAGE ET APPAREIL CORRESPONDANT

(30) Priority: 08.07.2021 CN 202110774711
(43) Date of publication of application: 13.03.2024
(73) Proprietor: Huawei Technologies Co., Ltd., Longgang Shenzhen, Guangdong 518129 (CN)
(72) Inventor: LIN, Miaohe, Shenzhen, Guangdong 518129 (CN); YAN, Xiaodan, Shenzhen, Guangdong 518129 (CN)
(74) Representative: Gill Jennings & Every LLP
(86) International application number: PCT/CN2022/103611
(87) International publication number: WO 2023/280097

(56) References cited:
- CN-A- 102 402 487
- CN-A- 107 168 801
- CN-A- 109 298 922
- CN-A- 111 338 831
- CN-A- 111 767 159
- CN-A- 112 613 276
- CN-A- 114 063 894
- US-A1- 2017 206 169
- KAN ZHONG ET AL: "Revisiting Swapping in User-space with Lightweight Threading", ARXIV.ORG, CORNELL UNIVERSITY LIBRARY, 201 OLIN LIBRARY CORNELL UNIVERSITY ITHACA, NY 14853, 29 July 2021 (2021-07-29), XP091018894

## Description

### TECHNICAL FIELD

This application relates to the field of computer technologies, and specifically, to a method for processing a page fault and a corresponding apparatus.

### BACKGROUND

A lightweight thread (LWT), also referred to as a coroutine, is mainly used to schedule mainstream storage. When a memory accessed by the LWT is swapped out (swapped out), a page fault (PF) is triggered, and a page needs to be swapped in (swapped in). Each processor is bound to only one thread, and a plurality of LWT tasks are executed on each thread. Therefore, after an LWT task triggers a page fault, a page fault event needs to be notified to a user mode through a page fault processing mechanism, and the LWT task continues to be executed only after the user mode swaps in a page.

In the current manner of processing a page fault, the LWT task in which the page fault occurs blocks an entire thread. Consequently, a service throughput decreases, and a long tail delay of the thread is caused. CN102402487A discloses a zero-copy message receiving method and system using virtual device mapping, that maps kernel low-end space to user space via mmap and sets a nopage method on the vm_area_struct structure. A user mode process triggers a CPU page fault exception when accessing a virtual address in mapped kernel memory, the operating system calls the nopage method upon page fault to obtain the page directory and page table entries corresponding to the physical address and reads data packets stored in kernel low-end space based on the obtained page directory and page table entries.

### SUMMARY

Embodiments of this application provide a method for processing a page fault, to reduce a delay of page fault processing and improve a service throughput. Embodiments of this application further provide a corresponding apparatus, computer device, computer-readable storage medium, computer program product, and the like.

A first aspect of this application provides a method for processing a page fault. The method is applied to a computer system, and the computer system may be a server, a terminal device, a virtual machine (VM), a container (container), or the like. The method includes: saving, into a shared memory, context of a first coroutine that triggers the page fault, where the first coroutine belongs to a first thread, and the shared memory is a memory that can be accessed by the first thread in both a kernel mode and a user mode; switching from the context of the first coroutine to context of the first thread, where the context of the first thread is configured into the shared memory during initialization of the first thread; switching from the kernel mode to the user mode; and obtaining the context of the first coroutine from the shared memory by running the first thread, to trigger a page swap-in procedure.

In this application, the page fault (PF) may also be referred to as missing page, and usually occurs in the kernel mode of an operating system (OS). After the page fault occurs, the page fault needs to be processed, and the processing process involves the kernel mode and the user mode. The kernel mode and the user mode are two modes or two states of the OS. The kernel mode is also usually referred to as a privileged mode, and the user mode is also usually referred to as a non-privileged mode. A thread is a minimum unit of operating system scheduling (processor scheduling). A coroutine is a lightweight thread. One thread may include a plurality of coroutines, and each coroutine may correspond to one task. Sometimes, the coroutine is also referred to as a coroutine task.

In this application, "first" in the first thread has no substantive meaning, and is only a thread in which the page fault occurs during running. The first thread may also be referred to as a service thread or an application thread.

In this application, the context of the first coroutine includes data in a register of a processor when the first coroutine is run. The context of the first thread includes data that is read out from the shared memory and that is written into the register. Switching from the context of the first coroutine to the context of the first thread means writing the context of the first thread into the register of the processor. The foregoing register may include any one or more of a general-purpose register, a program counter (PC), a program state (PS) register, and the like.

In the first aspect, the context of the first coroutine is stored into the shared memory in the kernel mode. After returning to the user mode from the kernel mode, the first thread may be run to obtain the context of the first coroutine from the shared memory, and then the page swap-in procedure is executed based on the context of the first coroutine. Compared with the conventional technology in which after a coroutine of a thread triggers a page fault, a monitor (monitor) thread is notified in a kernel mode, and then the thread enters a sleep state, and until after the monitor thread completes page swap-in by using a page swap-in (swap-in) thread, the monitor thread sends a notification message to the kernel mode to wake up the thread, and then the coroutine continues to be executed, a page fault processing process in this application can shorten a delay of page fault processing, to reduce a long tail delay of the first thread, thereby shortening a delay and correspondingly improving a service throughput.

In this application, the long tail delay means that in a process of running the thread in the computer system, delays of a small quantity of responses to operations corresponding to the thread are always higher than an average delay of the computer system, and the delays of the small quantity of responses are referred to as long tail delays. For example, there are 100 responses in the computer system, and the average delay of the 100 responses is 10 microseconds. If a delay of one response is 50 milliseconds, the delay of the response is the long tail delay. In addition, there is a common P99 standard about the delay for services. In the P99 standard, the long tail delay is defined as follows: Delays of 99% responses in the computer system need to be controlled within a duration, and delays of only 1% responses are allowed to exceed the duration. A delay of a response that exceeds the duration is referred to as the long tail delay.

In this application, the long tail delay of the thread may be understood as a long tail delay when the thread performs an input/output (I/O) operation. If no page fault occurs in a running process of the thread, it may take 10 microseconds to complete one I/O operation. If the page fault occurs, it takes hundreds of microseconds to process the page fault based on the solution in the conventional technology. This causes the long tail delay when the thread performs the current I/O. If the page fault is processed based on the solution provided in this application, it usually takes only several microseconds to complete processing the page fault. In this way, the long tail delay of the thread is greatly reduced.

In a possible implementation of the first aspect, the method further includes: when the page swap-in procedure is executed, running a second coroutine belonging to the first thread to execute a task corresponding to the second coroutine.

It should be understood that running the second coroutine when the page swap-in procedure is executed may be understood as running the second coroutine in a process of executing the page swap-in procedure. To be specific, execution of the page swap-in procedure and running of the second coroutine overlap in time, but a start time point at which the second coroutine starts to run is not limited. The second coroutine may start at the same time as the page swap-in procedure, or may start after the page swap-in procedure starts.

In this possible implementation, when the page swap-in procedure is executed, the second coroutine may be further asynchronously run. In this way, a service throughput can be further improved.

In a possible implementation of the first aspect, the step of switching from the context of the first coroutine to context of the first thread includes: writing the context of the first thread into a register of the computer system by using a hook function, to replace the context of the first coroutine in the register.

In this possible implementation, the operating system may perform context switching by using the hook (hook) function, and write the context of the first thread into the register of the computer system, to overwrite the context that is of the first coroutine and that is originally stored in the register.

In a possible implementation of the first aspect, the step of obtaining the context of the first coroutine from the shared memory by running the first thread, to trigger a page swap-in procedure includes: obtaining the context of the first coroutine from the shared memory by running the first thread, and obtaining a destination address from the context of the first coroutine, where the destination address is an address of a physical page to be accessed when the first coroutine triggers the page fault; and executing a swap-in procedure of the corresponding physical page based on the destination address.

In this possible implementation, the context of the first coroutine includes the address of the physical page to be accessed when the first coroutine triggers the page fault, namely, the destination address. In this way, the computer system can swap in the physical page corresponding to the destination address from a disk. In this manner of directly swapping in the physical page based on the destination address, a swap-in speed of the physical page can be improved, to further reduce a delay of page fault processing.

In a possible implementation of the first aspect, the method further includes: after the physical page is swapped in the memory, adding the first coroutine to a coroutine waiting queue, where a coroutine in the coroutine waiting queue is in a to-be-scheduled state.

In this possible implementation, after the physical page is swapped in, the first coroutine may be re-executed, and an execution sequence may be that the first coroutine is placed in the coroutine waiting queue to wait for scheduling. One or more coroutines are sequentially placed in the coroutine waiting queue, and the computer system sequentially schedules and executes the coroutines in the coroutine waiting queue based on the sequence in the coroutine waiting queue.

In a possible implementation of the first aspect, the shared memory is configured for the first thread during initialization of the first thread.

In a possible implementation of the first aspect, the page fault is triggered when the first coroutine is run to access a swapped-out physical page in the memory.

In a possible implementation of the first aspect, the shared memory is configured through a kernel virtual machine (ebpf). Certainly, this application is not limited to configuring the shared memory through the ebpf, and the shared memory may alternatively be configured in another manner.

In this application, the ebpf is a brand new design introduced in the kernel (kernel) 3.15, and an original BPF is developed into a "kernel virtual machine" having a more complex instruction set and a wider application scope.

A second aspect of this application provides an apparatus for processing a page fault. The apparatus for processing a page fault has a function of implementing the method according to the first aspect or any one of the possible implementations of the first aspect. The function may be implemented by hardware, or may be implemented by hardware executing corresponding software. The hardware or software includes one or more modules corresponding to the foregoing function, for example, a first processing unit, a second processing unit, a third processing unit, and a fourth processing unit. The four processing units may be implemented by one or more processing units.

A third aspect of this application provides a computer device. The computer device includes at least one processor, a memory, an input/output (I/O) interface, and computer-executable instructions that are stored in the memory and that can be run on the processor. When the computer-executable instructions are executed by the processor, the processor performs the method according to the first aspect or any one of the possible implementations of the first aspect.

A fourth aspect of this application provides a computer-readable storage medium storing one or more computer-executable instructions. When the computer-executable instructions are executed by a processor, one or more processors perform the method according to the first aspect or any one of the possible implementations of the first aspect.

A fifth aspect of this application provides a computer program product storing one or more computer-executable instructions. When the computer-executable instructions are executed by one or more processors, the one or more processors perform the method according to the first aspect or any one of the possible implementations of the first aspect.

A sixth aspect of this application provides a chip system, where the chip system includes at least one processor, and the at least one processor is configured to support an apparatus for processing a page fault in implementing functions in the first aspect or any one of the possible implementations of the first aspect. In a possible design, the chip system may further include a memory. The memory is configured to store program instructions and data that are necessary for the apparatus for processing a page fault. The chip system may include a chip, or may include the chip and another discrete device.

In embodiments of this application, after the first coroutine triggers the page fault, the context of the first coroutine is stored into the shared memory in the kernel mode. After returning to the user mode from the kernel mode, the OS may obtain the context of the first coroutine from the shared memory by running the first thread, and then execute the page swap-in procedure based on the context of the first coroutine. Compared with the conventional technology in which the monitor (monitor) thread is notified in the kernel mode and then the first thread enters the sleep state, and until after the monitor thread completes page swap-in by using the page swap-in (swap-in) thread, the monitor thread sends the notification message to the kernel to wake up the first thread, and then the first coroutine continues to be executed, the page fault processing process of the first thread can shorten a delay of page fault processing, to shorten a delay and correspondingly improve a service throughput.

### BRIEF DESCRIPTION OF DRAWINGS

FIG. 1 is a schematic diagram of an embodiment of a computer system according to an embodiment of this application;
FIG. 2 is a schematic diagram of a page fault processing architecture according to an embodiment of this application;
FIG. 3 is a schematic diagram of an embodiment of a method for processing a page fault according to an embodiment of this application;
FIG. 4 is a schematic diagram of another embodiment of a method for processing a page fault according to an embodiment of this application;
FIG. 5 is a schematic diagram of another embodiment of a method for processing a page fault according to an embodiment of this application;
FIG. 6 is a schematic diagram of another embodiment of a method for processing a page fault according to an embodiment of this application;
FIG. 7 is a schematic diagram of another embodiment of a method for processing a page fault according to an embodiment of this application;
FIG. 8 is a schematic diagram of another embodiment of a method for processing a page fault according to an embodiment of this application;
FIG. 9 is a schematic diagram of an embodiment of an apparatus for processing a page fault according to an embodiment of this application; and
FIG. 10 is a schematic diagram of a structure of a computer device according to an embodiment of this application.

### DESCRIPTION OF EMBODIMENTS

The following describes embodiments of this application with reference to accompanying drawings. It is clear that the described embodiments are merely some but not all of embodiments of this application. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data used in such a way is interchangeable in proper circumstances so that embodiments described herein can be implemented in orders other than the order illustrated or described herein. Moreover, the terms "include", "have" and any variants thereof mean to cover the non-exclusive inclusion, for example, a process, method, system, product, or device that includes a list of steps or units is not necessarily limited to those steps or units expressly listed, but other steps or units not expressly listed or inherent to these processes, methods, products, or devices may be included.

Embodiments of this application provide a method for processing a page fault, to reduce a delay of page fault processing and improve a service throughput. Embodiments of this application further provide a corresponding apparatus, computer device, computer-readable storage medium, computer program product, and the like. Details are separately described in the following.

The method for processing a page fault provided in embodiments of this application is applied to a computer system, and the computer system may be a server, a terminal device, or a virtual machine (VM).

The terminal device (which may also be referred to as user equipment (UE)) is a device having a wireless transceiver function, and may be deployed on land, including an indoor or outdoor device, a handheld device, or a vehicle-mounted device, may be deployed on water (for example, on a ship), or may be deployed in the air (for example, on an airplane, a balloon, and a satellite). The terminal may be a mobile phone (mobile phone), a pad (pad), a computer having a wireless transceiver function, a virtual reality (VR) terminal, an augmented reality (AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

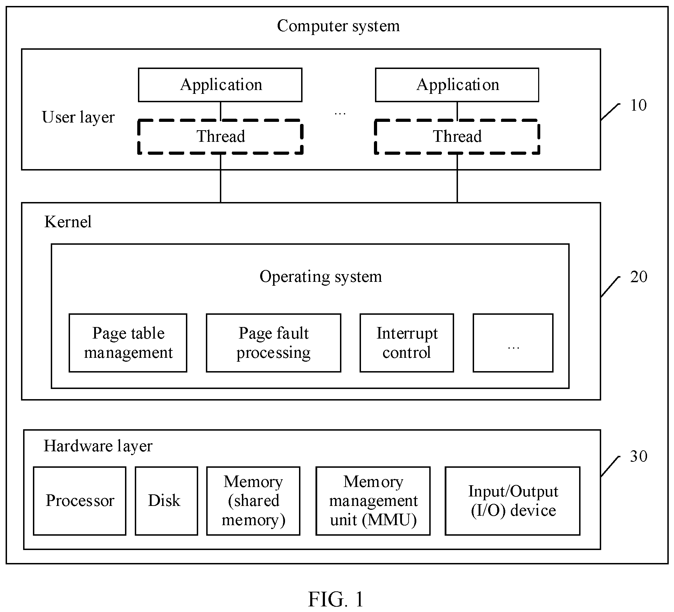

For an architecture of the computer system, refer to FIG. 1 for understanding. FIG. 1 is a schematic diagram of an architecture of a computer system.

As shown in FIG. 1, the architecture of the computer system includes a user layer 10, a kernel 20, and a hardware layer 30.

The user layer 10 includes a plurality of applications, each application corresponds to one thread, and the thread is a minimum unit of operating system (OS) scheduling. One thread may include a plurality of coroutines, and the coroutine is a lightweight thread. Each coroutine may correspond to one task, and sometimes the coroutine is also referred to as a coroutine task. In this application, the thread may also be referred to as a service thread, an application thread, or the like.

In the kernel 20, the OS is responsible for managing key resources, and providing an OS call entry for a thread of a user mode, to provide, in the kernel, services such as page fault (PF) processing, page table management, and interrupt control. In addition, the kernel 20 may also process a page fault (PF) that occurs in the OS. The page fault (PF) may also be referred to as missing page, and usually occurs in a kernel mode of the operating system. After the page fault occurs, the page fault needs to be processed, and the processing process involves the kernel mode and the user mode. The kernel mode and the user mode are two modes or two states of the OS. The kernel mode is also usually referred to as a privileged mode, and the user mode is also usually referred to as a non-privileged mode.

The hardware layer 30 includes hardware resources on which running of the kernel 20 relies, for example, a processor, a memory (the memory includes a shared memory configured for a thread, and in this application, the shared memory is a memory that can be accessed by the thread in both the kernel mode and the user mode), a memory management unit (MMU), an input/output (I/O) device, and a disk (disk). The processor may include a register group, and the register group may include a plurality of types of registers, for example, a stack frame register, a general-purpose register, and a non-volatile (callee-saved) register. The register is configured to store context of a thread or context of a coroutine of the thread.

If the page fault occurs when the thread accesses the memory, a corresponding physical page may be swapped in (swapped in) from the disk through a page fault processing mechanism, to resolve the page fault problem.

The MMU is computer hardware responsible for processing a memory access request from a central processing unit (CPU). Functions of the MMU include translation from a virtual address to a physical address, memory protection, and CPU cache control.

In the computer system, one application is usually bound to one thread, and one thread includes a plurality of lightweight threads (LWTs). The LWT is also referred to as a coroutine. The thread executes tasks corresponding to a plurality of coroutines included in the thread, and the tasks corresponding to the coroutines may also be referred to as coroutine tasks.

The thread executes the coroutine tasks one by one. When any coroutine task is executed, if the page fault occurs, based on a current page fault processing solution, a monitor (monitor) thread is notified in the kernel mode, and then the thread enters a sleep state. Until after the monitor thread completes page swap-in by using a page swap-in (swap-in) thread, the monitor thread sends a notification message to the kernel mode to wake up the thread, and then the coroutine task continues to be executed. In the current page fault processing solution, after the page fault occurs, the coroutine task that triggers the page fault blocks the entire thread. Consequently, a service throughput decreases and a long tail delay of the thread is caused.

In this application, the long tail delay means that in a process of running the thread in the computer system, delays of a small quantity of responses to operations corresponding to the thread are always higher than an average delay of the computer system, and the delays of the small quantity of responses are referred to as long tail delays. For example, there are 100 responses in the computer system, and the average delay of the 100 responses is 10 microseconds. If a delay of one response is 50 milliseconds, the delay of the response is the long tail delay. In addition, there is a common P99 standard about the delay for services. In the P99 standard, the long tail delay is defined as follows: Delays of 99% responses in the computer system need to be controlled within a duration, and delays of only 1% responses are allowed to exceed the duration. A delay of a response that exceeds the duration is referred to as the long tail delay.

In this application, the long tail delay of the thread may be understood as a long tail delay when the thread performs an input/output (I/O) operation. If no page fault occurs in a running process of the thread, it may take 10 microseconds to complete one I/O operation. If the page fault occurs, it takes hundreds of microseconds to process the page fault based on the solution in the conventional technology. This causes the long tail delay when the thread performs the current I/O. If the page fault is processed based on the solution provided in this application, it usually takes only several microseconds to complete processing the page fault. In this way, the long tail delay of the thread is greatly reduced.

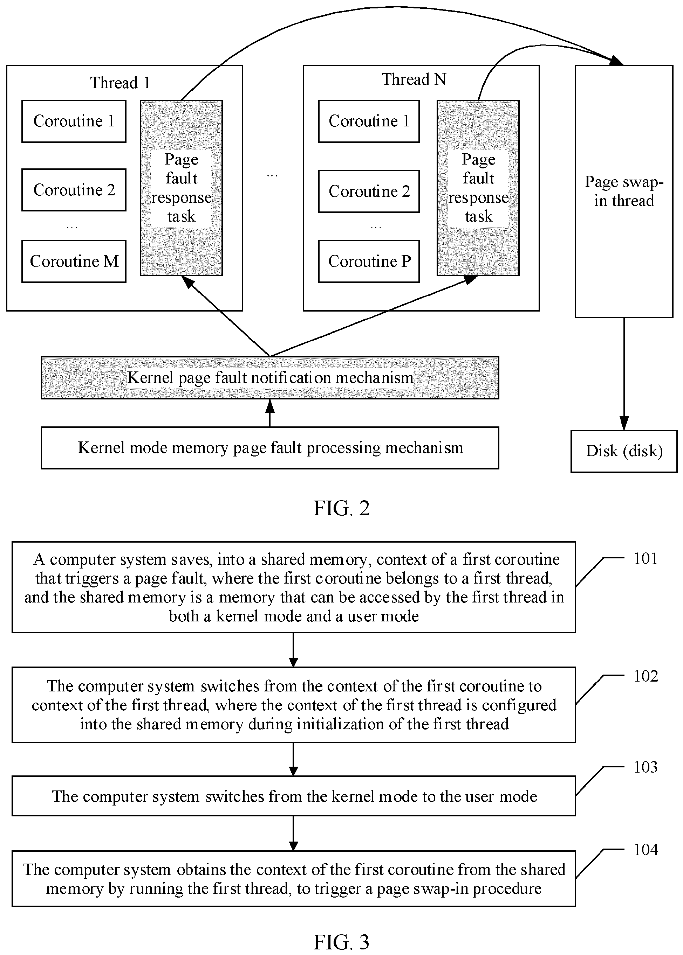

To accelerate processing of the page fault, an embodiment of this application provides a page fault processing architecture shown in FIG. 2. As shown in FIG. 2, the page fault processing architecture includes:
a plurality of threads, for example, a thread 1 to a thread N. Each thread may include a plurality of coroutines. For example, the thread 1 includes a coroutine 1, a coroutine 2 to a coroutine M, and the thread N includes a coroutine 1, a coroutine 2 to a coroutine P. N, M, and P are all positive integers, and may be equal or may not be equal. Each coroutine corresponds to one task. A page fault response task can be configured in each thread. The page fault response task is used to save context of a coroutine that generates a page fault and schedule a page swap-in thread.

A kernel mode memory page fault processing mechanism is used to trigger a kernel page fault notification mechanism when a page fault occurs in the kernel mode.

The kernel page fault notification mechanism is used to quickly switch, in a kernel mode page fault processing procedure, to the context of the thread of the user mode in which the coroutine generating the page fault is located.

The page swap-in thread is used to swap in a corresponding physical page from the disk to the memory based on the page fault response task.

Based on the computer system in FIG. 1 and the page fault processing architecture in FIG. 2, the following describes, with reference to the accompanying drawings, the method for processing a page fault provided in embodiments of this application.

As shown in FIG. 3, an embodiment of the method for processing a page fault provided in embodiments of this application includes the following steps.

101: The computer system saves, into the shared memory, context of a first coroutine that triggers a page fault, where the first coroutine belongs to a first thread, and the shared memory is a memory that can be accessed by the first thread in both a kernel mode and a user mode.

The context of the first coroutine is data in the register of the processor when the first coroutine is run.

For a relationship between the first coroutine and the first thread, refer to the thread 1, the coroutine 1, the coroutine 2, ..., and the coroutine M in FIG. 2 for understanding. The first coroutine may be any one of a plurality of coroutines included in the first thread.

Each thread may have a dedicated shared memory.

Optionally, the shared memory may be configured for the first thread during initialization of the first thread.

Optionally, the page fault may be triggered when the first coroutine is run to access a swapped-out physical page in the memory.

102: The computer system switches from the context of the first coroutine to the context of the first thread, where the context of the first thread is configured into the shared memory during initialization of the first thread.

The context of the first thread includes data that is read out from the shared memory and that is then written into the register. Switching from the context of the first coroutine to the context of the first thread means writing the context of the first thread into the register of the processor. The foregoing register may include any one or more of a general-purpose register, a program counter (PC), a program state (PS) register, and the like.

103: The computer system switches from the kernel mode to the user mode.

104: The computer system obtains the context of the first coroutine from the shared memory by running the first thread, to trigger a page swap-in procedure.

Because the first coroutine triggers the page fault, after the first thread is run in the user mode to obtain the context of the first coroutine from the shared memory, a subsequent page swap-in procedure may be executed based on the context of the first coroutine.

Based on the solution provided in this embodiment of this application, the context of the first coroutine is stored into the shared memory in the kernel mode. After returning to the user mode from the kernel mode, the first thread may be run to obtain the context of the first coroutine from the shared memory, and then the page swap-in procedure is executed based on the context of the first coroutine. Compared with the conventional technology in which after a coroutine triggers a page fault, a monitor (monitor) thread is notified in a kernel mode, and then the first thread enters a sleep state, and until after the monitor thread completes page swap-in by using a page swap-in (swap-in) thread, the monitor thread sends a notification message to the kernel mode to wake up the first thread, and then the coroutine continues to be executed, a page fault processing process in this application can shorten a delay of page fault processing, to reduce an input/output (I/O) long tail delay of the first thread, thereby shortening a delay and correspondingly improving a service throughput.

Optionally, the method for processing a page fault provided in this embodiment of this application may further include: when the page swap-in procedure is executed, running a second coroutine belonging to the first thread to execute a task corresponding to the second coroutine.

It should be understood that running the second coroutine when the page swap-in procedure is executed may be understood as running the second coroutine in a process of executing the page swap-in procedure. To be specific, execution of the page swap-in procedure and running of the second coroutine overlap in time, but a start time point at which the second coroutine starts to run is not limited. The second coroutine may start at the same time as the page swap-in procedure, or may start after the page swap-in procedure starts.

According to the solution provided in this embodiment of this application, the second coroutine is asynchronously run when the page swap-in procedure is executed, so that a service throughput can be further improved.

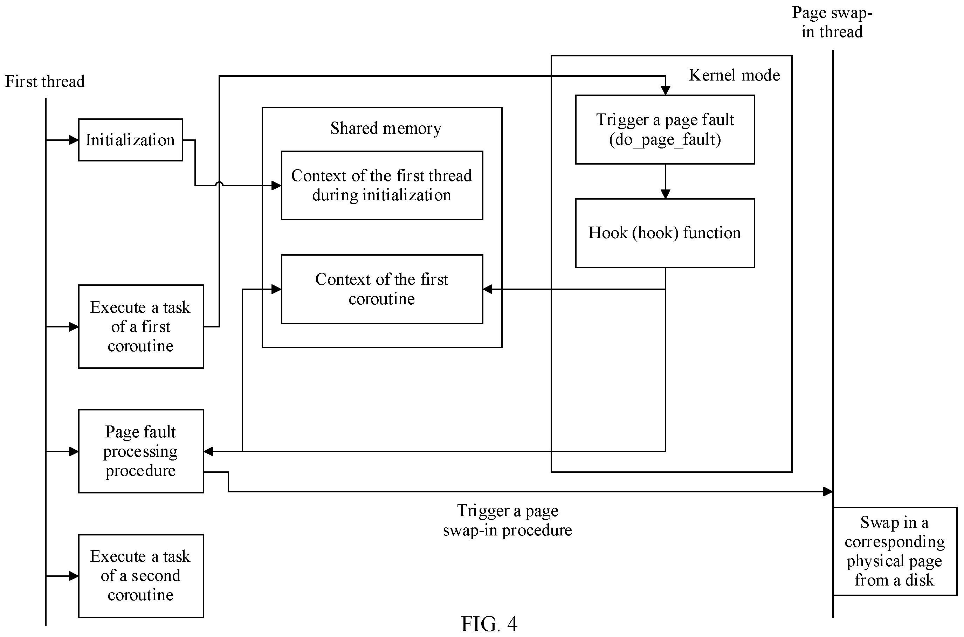

In general, for the method for processing a page fault provided in this embodiment of this application, refer to FIG. 4 for understanding.

As shown in FIG. 4, after being initialized, the first thread executes a task corresponding to the first coroutine. The first coroutine triggers the page fault in the running process. Then the first thread executes the page fault processing procedure, and further executes the task of the second coroutine when processing the page fault.

The content described in FIG. 4 may include three phases: 1: an initialization phase; 2: page fault processing in the kernel mode; and 3: page fault processing in the user mode. The three phases are separately described below with reference to the accompanying drawings.

### 1. Initialization phase.

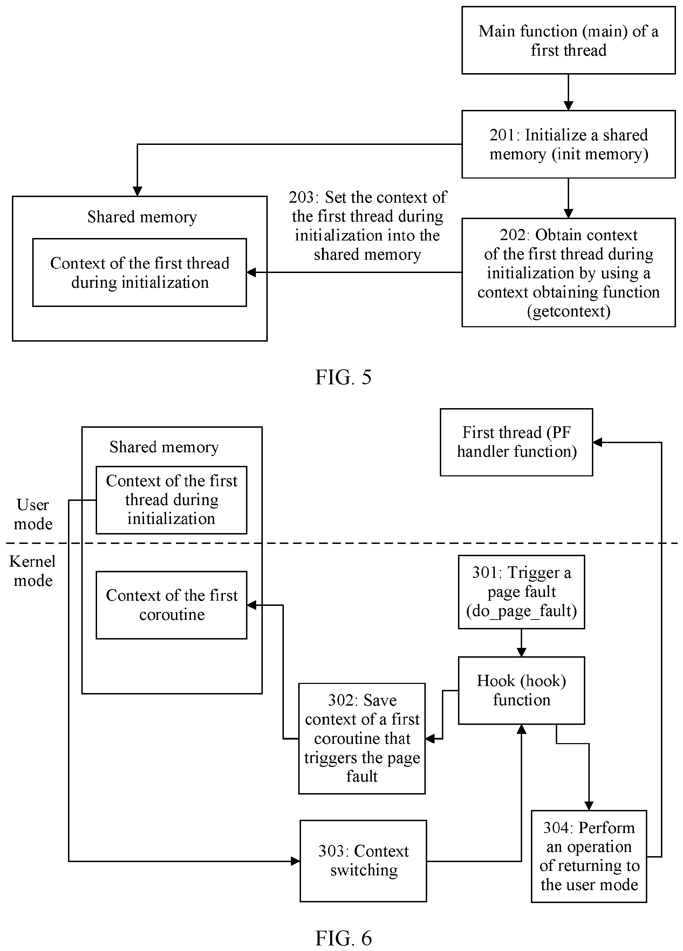

As shown in FIG. 5, a main function of the first thread is run to perform the following steps:
201: Initialize the shared memory, that is, allocate the shared memory to the first thread.
202: Obtain the context of the first thread during initialization by using a context obtaining function (getcontext).
203: Set the context of the first thread during initialization into the shared memory.

### 2. Page fault processing in the kernel mode.

As shown in FIG. 6, the process includes the following steps:
301: In the kernel mode, run the first coroutine to access a physical page that does not exist in the memory, to trigger the page fault.
302: Save the context of the first coroutine into the shared memory by using a hook (hook) function.
303: Perform context switching by using the hook (hook) function, and write the context of the first thread in the shared memory into the register of the computer system.

That is, the context of the first thread is written into the register of the computer system based on the hook function, to replace the context of the first coroutine in the register.

304: Return from the kernel mode to the user mode.

### 3. Page fault processing in the user mode.

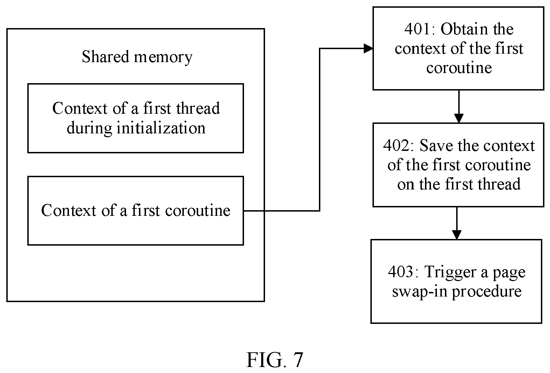

As shown in FIG. 7, the process includes the following steps:
It can be learned from the foregoing process description in FIG. 6 that, after page fault processing in the kernel mode ends, the computer system returns to the user mode, to perform page fault processing in the user mode.

401: In the user mode, run the first thread to obtain, from the shared memory, the context that is of the first coroutine and that is stored in the shared memory.

402: Save the context of the first coroutine on the first thread.

403: Trigger the page swap-in procedure based on the context of the first coroutine.

The process may be: obtaining a destination address from the context of the first coroutine, where the destination address is an address of a physical page to be accessed when the first coroutine triggers the page fault; and performing a swap-in procedure of the corresponding physical page based on the destination address.

To be specific, the context of the first coroutine includes the address of the physical page to be accessed when the first coroutine triggers the page fault, namely, the destination address. In this way, the computer system can swap in the physical page corresponding to the destination address from the disk. In this manner of directly swapping in the physical page based on the destination address, a swap-in speed of the physical page can be improved, to further reduce a delay of page fault processing.

In addition, when the page swap-in procedure is executed, the second coroutine of the first thread may be further scheduled, and the task corresponding to the second coroutine is executed. In this way, a service throughput can be further improved.

After the page swap-in procedure ends, that is, after the physical page is swapped into the memory, the first coroutine is added to a coroutine waiting queue, and a coroutine in the coroutine waiting queue is in a to-be-scheduled state.

To be specific, after the physical page is swapped in, the first coroutine may be re-executed, and an execution sequence may be that the first coroutine is placed in the coroutine waiting queue to wait for scheduling. One or more coroutines are sequentially placed in the coroutine waiting queue, and the computer system sequentially schedules and executes the coroutines in the coroutine waiting queue based on the sequence in the coroutine waiting queue.

The page fault processing process provided in this embodiment of this application may be implemented based on a kernel virtual machine (ebpf) mechanism, and the shared memory created based on the ebpf mechanism may be referred to as an ebpf map.

In this application, the ebpf is a brand new design introduced in the kernel (kernel) 3.15, and an original BPF is developed into a "kernel virtual machine" having a more complex instruction set and a wider application scope.

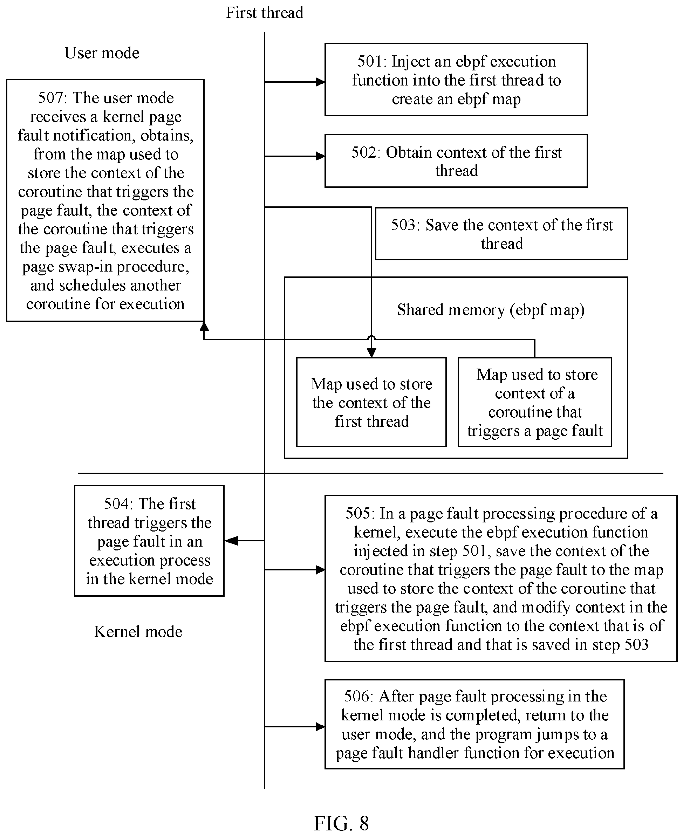

When being implemented based on the ebpf mechanism, the page fault processing process may be understood with reference to FIG. 8.

As shown in FIG. 8, the process includes the following steps:
501: Inject an ebpf execution function into the first thread to create an ebpf map.

The ebpf map includes a map used to store the context of the first thread and a map used to store the context of the coroutine that triggers the page fault.

502: Obtain the context of the first thread.

503: Save the context of the first thread into the map used to store the context of the first thread.

504: The first thread triggers the page fault in an execution process in the kernel mode.

505: In the page fault processing procedure of the kernel, execute the ebpf execution function injected in step 501, save the context of the coroutine that triggers the page fault into the map used to store the context of the coroutine that triggers the page fault, and modify context in the ebpf execution function to the context that is of the first thread and that is saved in step 503.

506: After page fault processing in the kernel mode is completed, return to the user mode, and the program jumps to a page fault handler function for execution.

507: The user mode receives a kernel page fault notification, obtains, from the map used to store the context of the coroutine that triggers the page fault, the context of the coroutine that triggers the page fault, executes the page swap-in procedure, and schedules another coroutine for execution.

After the page swap-in procedure is completed, the coroutine that triggers the page fault re-queues for scheduling.

The method for processing a page fault provided in this embodiment of this application has particularly obvious effect on a plurality of scenarios in which page faults are concurrently generated. Even if hundreds of cores simultaneously trigger page faults, page fault processing can be completed within several microseconds (µs). Compared with a process in which page fault processing can be completed within hundreds of microseconds in a current scenario in which page faults are concurrently generated in a plurality of cores, a processing speed of the solution of this application is greatly improved, a delay is greatly reduced, and a throughput is improved, thereby improving performance of the computer system.

For ease of describing the effect of this application, a scenario in which page faults are concurrently generated in 144 cores is used as an example. The following describes, by using Table 1, delays in terms of page fault processing and thread blocking in an existing page fault processing mechanism and a page fault processing mechanism provided in this application.

**Table 1: Delay comparison**

| Delay type | Existing page fault processing mechanism (U serfaultfd) | Page fault processing mechanism provided in this application | Remark |
|---|---|---|---|
| Delay of a page fault notification to a user mode | 600 microseconds | 6.8 microseconds | |
| Delay caused by thread blocking | 810+ microseconds | 6.8 microseconds | In this application, page swap-in may be asynchronously performed, and a thread is not blocked. |

It can be learned from a comparison between the second column and the third column in Table 1 that, in the solution provided in this application, delays in terms of page fault processing and thread blocking are both greatly shortened compared with a delay in the conventional technology. In a large-scale and high-concurrency environment, in the existing Userfaultfd, the delay of the page fault notification to the user mode exceeds 600 microseconds. This is unacceptable to services. It can be learned from the analysis that, in a case of delays of page fault notifications to the user mode in a high-concurrency scenario, contention for file handles is extremely fierce, and as a quantity of cores increases, the contention becomes increasingly fierce. A synchronous swap-in feature of the Userfaultfd also makes a basic delay of the Userfaultfd not less than 210+ µs (that is, a delay caused by an SSD medium swapping in a physical page). However, in this application, a microsecond-level notification delay can still be achieved in a scenario in which page faults are concurrently generated in hundreds of cores. As a quantity of cores of a host increases, benefits are more obvious.

The foregoing describes the method for processing a page fault. The following describes, with reference to the accompanying drawings, an apparatus for processing a page fault provided in embodiments of this application.

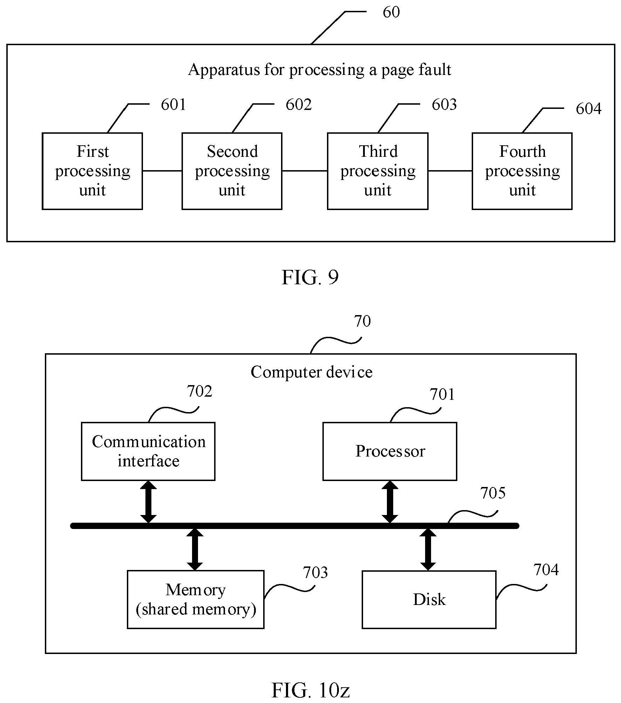

As shown in FIG. 9, an embodiment of an apparatus 60 for processing a page fault provided in embodiments of this application includes:
a first processing unit 601, configured to save, into a shared memory, context of a first coroutine that triggers the page fault, where the first coroutine belongs to a first thread, and the shared memory is a memory that can be accessed by the first thread in both a kernel mode and a user mode; and the first processing unit 601 may perform step 101 in the foregoing method embodiment;
a second processing unit 602, configured to: after the first processing unit 601 saves the context of the first coroutine into the shared memory, switch from the context of the first coroutine to the context of the first thread, where the context of the first thread is configured into the shared memory during initialization of the first thread; and the second processing unit 602 may perform step 102 in the foregoing method embodiment;
a third processing unit 603, configured to: after the second processing unit 602 switches the context, switch from the kernel mode to the user mode, where the third processing unit 603 may perform step 103 in the foregoing method embodiment; and
a fourth processing unit 604, configured to: after the third processing unit 603 switches from the kernel mode to the user mode, obtain the context of the first coroutine from the shared memory by running the first thread, to trigger a page swap-in procedure, where the fourth processing unit 604 may perform step 104 in the foregoing method embodiment.

Based on the solution provided in this embodiment of this application, the context of the first coroutine is stored into the shared memory in the kernel mode. After returning to the user mode from the kernel mode, the first thread may be run to obtain the context of the first coroutine from the shared memory, and then the page swap-in procedure is executed based on the context of the first coroutine. Compared with the conventional technology in which after a coroutine triggers a page fault, a monitor (monitor) thread is notified in a kernel mode, and then the first thread enters a sleep state, and until after the monitor thread completes page swap-in by using a page swap-in (swap-in) thread, the monitor thread sends a notification message to the kernel mode to wake up the first thread, and then the coroutine continues to be executed, a page fault processing process in this application can shorten a delay of page fault processing, to reduce an input/output (I/O) long tail delay of the first thread, thereby shortening a delay and correspondingly improving a service throughput.

Optionally, the fourth processing unit 604 is further configured to: when the page swap-in procedure is executed, run a second coroutine belonging to the first thread to execute a task corresponding to the second coroutine.

Optionally, the second processing unit 602 is configured to write the context of the first thread into a register of a computer system by using a hook function, to replace the context of the first coroutine in the register.

Optionally, the fourth processing unit 604 is configured to: obtain the context of the first coroutine from the shared memory by running the first thread, and obtain a destination address from the context of the first coroutine, where the destination address is an address of a physical page to be accessed when the first coroutine triggers the page fault; and execute a swap-in procedure of the corresponding physical page based on the destination address.

Optionally, the fourth processing unit 604 is further configured to: after the physical page is swapped in the memory, add the first coroutine to a coroutine waiting queue. A coroutine in the coroutine waiting queue is in a to-be-scheduled state.

Optionally, the shared memory is configured for the first thread during initialization of the first thread.

Optionally, the page fault is triggered when the first coroutine is run to access a swapped-out physical page in the memory.

Optionally, the shared memory is configured through a kernel virtual machine ebpf.

For related content of the apparatus 60 for processing a page fault provided in this embodiment of this application, refer to corresponding content in the part of the foregoing method embodiments for understanding. Details are not described herein again.

FIG. 10 is a schematic diagram of a possible logical structure of a computer device 70 according to an embodiment of this application. The computer device 70 includes: a processor 701, a communication interface 702, a memory 703, a disk 704, and a bus 705. The processor 701, the communication interface 702, the memory 703, and the disk 704 are connected to each other through the bus 705. In this embodiment of this application, the processor 701 is configured to control and manage an action of the computer device 70. For example, the processor 701 is configured to perform the steps in the method embodiments in FIG. 3 to FIG. 8. The communication interface 702 is configured to support the computer device 70 in performing communication. The memory 703 is configured to: store program code and data of the computer device 70, and provide memory space for a thread. The memory further includes a shared memory. For a function of the shared memory, refer to the shared memory in the part of the foregoing method embodiments for understanding. A disk user stores a physical page swapped out of the memory.

The processor 701 may be a central processing unit, a general-purpose processor, a digital signal processor, an application-specific integrated circuit, a field programmable gate array or another programmable logic device, a transistor logic device, a hardware component, or any combination thereof. The processor 701 may implement or execute various example logical blocks, modules, and circuits described with reference to content disclosed in this application. Alternatively, the processor 701 may be a combination implementing a computing function, for example, a combination of one or more microprocessors or a combination of a digital signal processor and a microprocessor. The bus 705 may be a peripheral component interconnect (PCI) bus, an extended industry standard architecture (EISA) bus, or the like. Buses may be classified into an address bus, a data bus, a control bus, and the like. For ease of representation, the bus is represented with only one thick line in FIG. 10, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the steps performed by the processor in FIG. 3 to FIG. 8.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 3 to FIG. 8.

In another embodiment of this application, a chip system is further provided. The chip system includes a processor. The processor is configured to support an apparatus for processing a page fault in implementing the steps performed by the processor in FIG. 3 to FIG. 8. In a possible design, the chip system may further include a memory. The memory is configured to store program instructions and data that are necessary for a data writing apparatus. The chip system may include a chip, or may include the chip and another discrete device.

A person of ordinary skill in the art may be aware that, the units and algorithm steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in embodiments of this application, it should be understood that the disclosed system, apparatus, and method may be implemented in other manners. For example, the foregoing apparatus embodiment is merely an example. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

## Claims

1. A method for processing a page fault, wherein the method is applied to a computer system, and the method comprises:
saving (101), into a shared memory, context of a first coroutine that triggers the page fault, wherein the first coroutine belongs to a first thread, and the shared memory is a memory that can be accessed by the first thread in both a kernel mode and a user mode;
switching (102) from the context of the first coroutine to context of the first thread, wherein the context of the first thread is configured into the shared memory during initialization of the first thread;
switching (103) from the kernel mode to the user mode; and
obtaining (104) the context of the first coroutine from the shared memory by running the first thread, to trigger a page swap-in procedure.

2. The processing method according to claim 1, wherein the method further comprises:
when the page swap-in procedure is executed, running a second coroutine belonging to the first thread to execute a task corresponding to the second coroutine.

3. The processing method according to claim 1 or 2, wherein the switching from the context of the first coroutine to context of the first thread comprises:
writing the context of the first thread into a register of the computer system by using a hook function, to replace the context of the first coroutine in the register.

4. The processing method according to any one of claims 1 to 3, wherein the obtaining the context of the first coroutine from the shared memory by running the first thread, to trigger a page swap-in procedure comprises:
obtaining the context of the first coroutine from the shared memory by running the first thread, and obtaining a destination address from the context of the first coroutine, wherein the destination address is an address of a physical page to be accessed when the first coroutine triggers the page fault; and
executing a swap-in procedure of the corresponding physical page based on the destination address.

5. The processing method according to claim 4, wherein the method further comprises:
after the physical page is swapped in the memory, adding the first coroutine to a coroutine waiting queue, wherein a coroutine in the coroutine waiting queue is in a to-be-scheduled state.

6. The processing method according to any one of claims 1 to 5, wherein the shared memory is configured for the first thread during initialization of the first thread.

7. The processing method according to any one of claims 1 to 6, wherein the page fault is triggered when the first coroutine is run to access a swapped-out physical page in the memory.

8. An apparatus for processing a page fault, comprising:
a first processing unit, configured to save, into a shared memory, context of a first coroutine that triggers the page fault, wherein the first coroutine belongs to a first thread, and the shared memory is a memory that can be accessed by the first thread in both a kernel mode and a user mode;
a second processing unit, configured to: after the first processing unit saves the context of the first coroutine into the shared memory, switch from the context of the first coroutine to context of the first thread, wherein the context of the first thread is configured into the shared memory during initialization of the first thread;
a third processing unit, configured to: after the second processing unit switches the context, switch from the kernel mode to the user mode; and
a fourth processing unit, configured to: after the third processing unit switches from the kernel mode to the user mode, obtain the context of the first coroutine from the shared memory by running the first thread, to trigger a page swap-in procedure.

9. The processing apparatus according to claim 8, wherein
the fourth processing unit is further configured to: when the page swap-in procedure is executed, run a second coroutine belonging to the first thread to execute a task corresponding to the second coroutine.

10. The processing apparatus according to claim 8 or 9, wherein
the second processing unit is configured to write the context of the first thread into a register of the computer system by using a hook function, to replace the context of the first coroutine in the register.

11. The apparatus according to any one of claims 8 to 10, wherein
the fourth processing unit is configured to: obtain the context of the first coroutine from the shared memory by running the first thread, and obtain a destination address from the context of the first coroutine, wherein the destination address is an address of a physical page to be accessed when the first coroutine triggers the page fault; and execute a swap-in procedure of the corresponding physical page based on the destination address.

12. The processing apparatus according to claim 11, wherein
the fourth processing unit is further configured to: after the physical page is swapped in the memory, add the first coroutine to a coroutine waiting queue, wherein a coroutine in the coroutine waiting queue is in a to-be-scheduled state.

13. A computer-readable storage medium, storing a computer program, wherein when the computer program is executed by one or more processors, the method according to any one of claims 1 to 7 is implemented.

14. A computing device, comprising one or more processors, and a computer-readable storage medium according to claim 13.

15. A chip system, comprising one or more processors, wherein the one or more processors are configured to perform the method according to any one of claims 1 to 7.

## Patentansprüche

1. Verfahren zum Verarbeiten eines Seitenfehlers, wobei das Verfahren auf ein Computersystem angewandt wird und das Verfahren Folgendes umfasst:
Speichern (101), in einen gemeinsam genutzten Speicher, eines Kontextes einer ersten Koroutine, die den Seitenfehler auslöst, wobei die erste Koroutine zu einem ersten Thread gehört und der gemeinsam genutzte Speicher ein Speicher ist, auf den durch den ersten Thread in sowohl einem Kernmodus als auch einem Benutzermodus zugegriffen werden kann;
Umschalten (102) von dem Kontext der ersten Koroutine auf einen Kontext des ersten Threads, wobei der Kontext des ersten Threads während einer Initialisierung des ersten Threads in den gemeinsam genutzten Speicher konfiguriert wird;
Umschalten (103) von dem Kernmodus auf den Benutzermodus; und
Erlangen (104) des Kontextes der ersten Koroutine aus dem gemeinsam genutzten Speicher durch Laufenlassen des ersten Threads, um eine Seiteneintauschprozedur auszulösen.

2. Verarbeitungsfahren nach Anspruch 1, wobei das Verfahren ferner Folgendes umfasst:
wenn die Seiteneintauschprozedur ausgeführt wird, Laufenlassen einer zweiten Koroutine des ersten Threads, um eine Aufgabe auszuführen, die der zweiten Koroutine entspricht.

3. Verarbeitungsverfahren nach Anspruch 1 oder 2, wobei das Umschalten von dem Kontext der ersten Koroutine auf einen Kontext des ersten Threads Folgendes umfasst:
Schreiben des Kontextes des ersten Threads in ein Register des Computersystems unter Verwendung einer Hook-Funktion, um den Kontext der ersten Koroutine in dem Register zu ersetzen.

4. Verarbeitungsverfahren nach einem der Ansprüche 1 bis 3, wobei das Erlangen des Kontextes der ersten Koroutine aus dem gemeinsam genutzten Speicher durch Laufenlassen des ersten Threads, um eine Seiteneintauschprozedur auszulösen, Folgendes umfasst:
Erlangen des Kontextes der ersten Koroutine aus dem gemeinsam genutzten Speicher durch Laufenlassen des ersten Threads und Erlangen einer Zieladresse aus dem Kontext der ersten Koroutine, wobei die Zieladresse eine Adresse einer physischen Seite ist, auf die zuzugreifen ist, wenn die erste Koroutine den Seitenfehler auslöst; und
Ausführen einer Eintauschprozedur der entsprechenden physischen Seite basierend auf der Zieladresse.

5. Verarbeitungsverfahren nach Anspruch 4, wobei das Verfahren ferner Folgendes umfasst:
nachdem die physische Seite in dem Speicher getauscht wurde, Hinzufügen der ersten Koroutine zu einer Koroutinenwarteschlange, wobei sich eine Koroutine in der Koroutinenwarteschlange in einem zu planenden Zustand befindet.

6. Verarbeitungsverfahren nach einem der Ansprüche 1 bis 5, wobei der gemeinsam genutzte Speicher während der Initialisierung des ersten Threads für den ersten Thread konfiguriert wird.

7. Verarbeitungsverfahren nach einem der Ansprüche 1 bis 6, wobei der Seitenfehler ausgelöst wird, wenn die erste Koroutine laufen gelassen wird, um auf eine ausgetauschte physische Seite in dem Speicher zuzugreifen.

8. Vorrichtung zum Verarbeiten eines Seitenfehlers, umfassend:
eine erste Verarbeitungseinheit, die dazu konfiguriert ist, in einen gemeinsam genutzten Speicher einen Kontext einer ersten Koroutine zu speichern, die den Seitenfehler auslöst, wobei die erste Koroutine zu einem ersten Thread gehört und der gemeinsam genutzte Speicher ein Speicher ist, auf den durch den ersten Thread in sowohl einem Kernmodus als auch einem Benutzermodus zugegriffen werden kann;
eine zweite Verarbeitungseinheit, die zu Folgendem konfiguriert ist: nachdem die erste Verarbeitungseinheit den Kontext der ersten Koroutine in den gemeinsam genutzten Speicher gespeichert hat, Umschalten von dem Kontext der ersten Koroutine auf einen Kontext des ersten Threads, wobei der Kontext des ersten Threads während einer Initialisierung des ersten Threads in den gemeinsam genutzten Speicher konfiguriert wird;
eine dritte Verarbeitungseinheit, die zu Folgendem konfiguriert ist: nachdem die zweite Verarbeitungseinheit den Kontext umgeschaltet hat, Umschalten von dem Kernmodus auf den Benutzermodus; und
eine vierte Verarbeitungseinheit, die zu Folgendem konfiguriert ist: nachdem die dritte Verarbeitungseinheit von dem Kernmodus auf den Benutzermodus umgeschaltet hat, Erlangen des Kontextes der ersten Koroutine aus dem gemeinsam genutzten Speicher durch Laufenlassen des ersten Threads, um eine Seiteneintauschprozedur auszulösen.

9. Verarbeitungsvorrichtung nach Anspruch 8, wobei
die vierte Verarbeitungseinheit ferner zu Folgendem konfiguriert ist: wenn die Seiteneintauschprozedur ausgeführt wird, Laufenlassen einer zweiten Koroutine, die zu dem ersten Thread gehört, um eine Aufgabe auszuführen, die der zweiten Koroutine entspricht.

10. Verarbeitungsvorrichtung nach Anspruch 8 oder 9, wobei
die zweite Verarbeitungseinheit dazu konfiguriert ist, den Kontext des ersten Threads unter Verwendung einer Hook-Funktion in ein Register des Computersystems zu schreiben, um den Kontext der ersten Koroutine in dem Register zu ersetzen.

11. Vorrichtung nach einem der Ansprüche 8 bis 10, wobei
die vierte Verarbeitungseinheit zu Folgendem konfiguriert ist: Erlangen des Kontextes der ersten Koroutine aus dem gemeinsam genutzten Speicher durch Laufenlassen des ersten Threads und Erlangen einer Zieladresse aus dem Kontext der ersten Koroutine, wobei die Zieladresse eine Adresse einer physischen Seite ist, auf die zuzugreifen ist, wenn die erste Koroutine den Seitenfehler auslöst; und Ausführen einer Eintauschprozedur der entsprechenden physischen Seite basierend auf der Zieladresse.

12. Verarbeitungsvorrichtung nach Anspruch 11, wobei
die vierte Verarbeitungseinheit ferner zu Folgendem konfiguriert ist: nachdem die physische Seite in dem Speicher getauscht wurde, Hinzufügen der ersten Koroutine zu einer Koroutinenwarteschlange, wobei sich eine Koroutine in der Koroutinenwarteschlange in einem zu planenden Zustand befindet.

13. Computerlesbares Speichermedium, das ein Computerprogramm speichert, wobei, wenn das Computerprogramm durch einen oder mehrere Prozessoren ausgeführt wird, das Verfahren nach einem der Ansprüche 1 bis 7 umgesetzt wird.

14. Recheneinrichtung, umfassend einen oder mehrere Prozessoren und ein computerlesbares Speichermedium nach Anspruch 13.

15. Chipsystem, umfassend einen oder mehrere Prozessoren, wobei der eine oder die mehreren Prozessoren dazu konfiguriert sind, das Verfahren nach einem der Ansprüche 1 bis 7 durchzuführen.

## Revendications

1. Procédé de traitement d'un défaut de page, dans lequel le procédé est appliqué à un système informatique, et le procédé comprend :
la sauvegarde (101), dans une mémoire partagée, du contexte d'une première coroutine qui déclenche le défaut de page, dans lequel la première coroutine appartient à un premier thread, et la mémoire partagée est une mémoire à laquelle le premier thread peut accéder à la fois en mode noyau et en mode utilisateur ;
le passage (102) du contexte de la première coroutine au contexte du premier thread, dans lequel le contexte du premier thread est configuré dans la mémoire partagée lors de l'initialisation du premier thread ;
le passage (103) du mode noyau au mode utilisateur ; et
l'obtention (104) du contexte de la première coroutine à partir de la mémoire partagée en exécutant le premier thread, pour déclencher une procédure d'échange de page.

2. Procédé de traitement selon la revendication 1, dans lequel le procédé comprend en outre :
lorsque la procédure d'échange de page est exécutée, une seconde coroutine appartenant au premier thread est lancée pour exécuter une tâche correspondant à la seconde coroutine.

3. Procédé de traitement selon la revendication 1 ou 2, dans lequel le passage du contexte de la première coroutine au contexte du premier thread comprend :
l'écriture du contexte du premier thread dans un registre du système informatique à l'aide d'une fonction de hook, afin de remplacer le contexte de la première coroutine dans le registre.

4. Procédé de traitement selon l'une quelconque des revendications 1 à 3, dans lequel l'obtention du contexte de la première coroutine à partir de la mémoire partagée par l'exécution du premier thread, afin de déclencher une procédure d'échange de pages, comprend :
l'obtention du contexte de la première coroutine à partir de la mémoire partagée en exécutant le premier thread, et l'obtention d'une adresse de destination à partir du contexte de la première coroutine, dans lequel l'adresse de destination est l'adresse d'une page physique à laquelle accéder lorsque la première coroutine déclenche le défaut de page ; et
l'exécution d'une procédure d'échange de la page physique correspondante sur la base de l'adresse de destination.

5. Procédé de traitement selon la revendication 4, dans lequel le procédé comprend en outre :
après l'échange de la page physique en mémoire, l'ajout de la première coroutine à une file d'attente de coroutines, dans lequel une coroutine dans la file d'attente de coroutines est dans un état à planifier.

6. Procédé de traitement selon l'une quelconque des revendications 1 à 5, dans lequel la mémoire partagée est configurée pour le premier thread lors de l'initialisation du premier thread.

7. Procédé de traitement selon l'une quelconque des revendications 1 à 6, dans lequel le défaut de page est déclenché lorsque la première coroutine est exécutée pour accéder à une page physique échangée dans la mémoire.

8. Appareil de traitement d'un défaut de page, comprenant :
une première unité de traitement configurée pour sauvegarder, dans une mémoire partagée, le contexte d'une première coroutine qui déclenche le défaut de page, dans lequel la première coroutine appartient à un premier thread, et la mémoire partagée est une mémoire qui peut être consultée par le premier thread à la fois en mode noyau et en mode utilisateur ;
une deuxième unité de traitement, configurée pour : après l'enregistrement du contexte de la première coroutine par la première unité de traitement dans la mémoire partagée, passer du contexte de la première coroutine au contexte du premier thread, dans lequel le contexte du premier thread est configuré dans la mémoire partagée lors de l'initialisation du premier thread ;
une troisième unité de traitement, configurée pour : après le changement de contexte par la deuxième unité de traitement, passer du mode noyau au mode utilisateur ; et
une quatrième unité de traitement, configurée pour : après le passage de la troisième unité de traitement du mode noyau au mode utilisateur, obtenir le contexte de la première coroutine à partir de la mémoire partagée en exécutant le premier thread, afin de déclencher une procédure d'échange de page.

9. Appareil de traitement selon la revendication 8, dans lequel la quatrième unité de traitement est en outre configurée pour : lors de l'exécution de la procédure d'échange de page, exécuter une seconde coroutine appartenant au premier thread pour exécuter une tâche correspondant à la seconde coroutine.

10. Appareil de traitement selon la revendication 8 ou 9, dans lequel
la deuxième unité de traitement est configurée pour écrire le contexte du premier thread dans un registre du système informatique à l'aide d'une fonction de hook, afin de remplacer le contexte de la première coroutine dans le registre.

11. Appareil selon l'une quelconque des revendications 8 à 10, dans lequel
la quatrième unité de traitement est configurée pour : obtenir le contexte de la première coroutine à partir de la mémoire partagée en exécutant le premier thread, et obtenir une adresse de destination à partir du contexte de la première coroutine, dans lequel l'adresse de destination est une adresse d'une page physique à laquelle accéder lorsque la première coroutine déclenche le défaut de page ; et exécuter une procédure d'échange de la page physique correspondante sur la base de l'adresse de destination.

12. Appareil de traitement selon la revendication 11, dans lequel
la quatrième unité de traitement est en outre configurée pour : après l'échange de la page physique en mémoire, ajouter la première coroutine à une file d'attente de coroutines, dans lequel une coroutine dans la file d'attente de coroutines est dans un état à planifier.

13. Support de stockage lisible par ordinateur, stockant un programme informatique, dans lequel lorsque le programme informatique est exécuté par un ou plusieurs processeurs, le procédé selon l'une quelconque des revendications 1 à 7 est mis en œuvre.

14. Dispositif informatique, comprenant un ou plusieurs processeurs et un support de stockage lisible par ordinateur selon la revendication 13.

15. Système de puce, comprenant un ou plusieurs processeurs, dans lequel les un ou plusieurs processeurs sont configurés pour réaliser le procédé selon l'une quelconque des revendications 1 à 7.
